Europäisches Patentamt

European Patent Office

Office européen des brevets

(11) Veröffentlichungsnummer: **0 305 781**
**A1**

## (12) EUROPÄISCHE PATENTANMELDUNG

(21) Anmeldenummer: 88113023.1

(22) Anmeldetag: **10.08.88**

(51) Int. Cl.⁴: **G01B 21/04 , G01B 7/03**

(30) Priorität: **10.08.87 DE 3726588**

(43) Veröffentlichungstag der Anmeldung:
**08.03.89 Patentblatt 89/10**

(84) Benannte Vertragsstaaten:
**DE FR GB IT**

(71) Anmelder: **MORA FABRIK FUR MESSGERÄTE HELMUT FREUND GMBH**
**Dieselstrasse 5**
**D-8750 Aschaffenburg(DE)**

(72) Erfinder: **Brübach, Rainer c/o MORA Fabr. f. Messgeraete**
**H. Freund GmbH Dieselstr.5**
**D-Aschaffenburg(DE)**

(74) Vertreter: **Dorner, Jörg, Dr.-Ing. et al**
**Dorner & Hufnagel Patentanwälte**
**Ortnitstrasse 20**
**D-8000 München 81(DE)**

(54) **Taster-Messeinrichtung.**

(57) Eine Vielzahl von Abtastpunkten kann unter Verwendung eines Meßtasters (1), welcher ein den Kontakt seines Tastorgans (2) mit einer Prüflingsoberfläche (3) anzeigendes Signal erzeugt, jeweils Meßwerten zugeordnet werden, welche die Lage der Abtastpunkte relativ zu einer Bezugsposition angeben, indem der Meßtaster (1) mit vorbestimmter, gleichbleibender Geschwindigkeit (V) in einer Richtung senkrecht zu seiner Antastrichtung (P) verfahren wird und gleichzeitig zur Ausführung von Schwingbewegungen definierter Amplitude und Frequenz in einer zu der Antastrichtung (P) parallelen Richtung veranlaßt wird, wobei die jeweiligen augenblicklichen Amplitudenwerte der Schwingbewegung durch einen Stellungsmelder (17,18) geliefert werden, dessen Ausgangssignale mit den Ausgangssignalen des Meßtasters in (1) Beziehung gesetzt werden.

FIG. 1

# Taster-Meßeinrichtung

Die Erfindung betrifft eine Taster-Meßeinrichtung mit einem Meßtaster, welcher ein den Kontakt eines Tastorgans des Meßtasters mit einer Prüflingsoberfläche anzeigendes Signal erzeugt und an eine Haltevorrichtung anschließbar ist, welche in vorbestimmten Richtungen mit meßbarer Geschwindigkeit bzw. um meßbare Wegstücke relativ zu einer Bezugsposition verfahrbar ist.

Taster-Meßeinrichtungen dieser Art können am Querarmende einer Dreikoordinaten-Meßmaschine befestigt sein, die eine von einem Gerätefuß aufragende Vertikalsäule, einen längs der Vertikalsäule verfahrbaren Schieber sowie an diesem den in Horizontalrichtung verfahrbaren Querarm aufweist.

Soll mit einer an eine Dreikoordinaten-Meßmaschine angeschlossenen Taster-Meßeinrichtung eine Vielzahl von Punkten einer Prüflingsoberfläche abgetastet werden, um etwa die Lage der Punkte relativ zu einer Bezugsebene auszumessen, so ist eine entsprechende Vielzahl von Einstellungen der Dreikoordinaten-Meßmaschine erforderlich, wobei die den Einstellungen jeweils entsprechenden Meßwerte dem Tasterausgangssignal zugeordnet werden müssen.

Bei der Einstellung der Dreikoordinaten-Meßmaschine sind bei diesem herkömmlichen Taster-Meßverfahren vergleichsweise große Massen zu bewegen und die Aufnahme einer großen Anzahl von Meßpunkten ist zeitraubend. Die Einstellbewegungen der Dreikoordinaten-Meßmaschine können insbesondere nur mit begrenzter Geschwindigkeit ausgeführt werden, da anderenfalls Schwingungen auftreten, welche die Meßgenauigkeit verschlechtern.

Durch die Erfindung soll die Aufgabe gelöst werden, eine Taster-Meßeinrichtung der eingangs kurz beschriebenen Art so auszugestalten, daß eine Vielzahl von Punkten einer Prüflingsoberfläche zur Bestimmung der Lage dieser Punkte relativ zu einer Bezugsposition sehr rasch und mit hoher Genauigkeit abgetastet werden kann.

Diese Aufgabe wird erfindungsgemäß dadurch gelöst, daß der Meßtaster gegenüber der Haltevorrichtung, also beispielsweise gegenüber dem Querarm einer Dreikoordinaten-Meßmaschine, zur Ausführung von Schwingbewegungen definierter Amplitude und Frequenz in einer zur Antastrichtung des Meßtasters parallelen Richtung beweglich geführt und mit einem Schwingantrieb gekuppelt ist.

Insbesondere ist mit dem Meßtaster ein Stellungsmelder verbunden, der Signale entsprechend dem jeweiligen augenblicklichen Amplitudenwert der Schwingbewegungen des Meßtasters erzeugt.

Wird die Taster-Meßeinrichtung der hier angegebenen Art an der Dreikoordinaten-Meßmaschine mit vorbestimmter Geschwindigkeit in einer zur Antastrichtung des Meßtasters senkrechten Richtung verfahren, so kann durch Zuordnung der Ausgangssignale des Meßtasters zu den die augenblicklichen Amplitudenwerte angebenden Ausgangssignalen des Stellungsmelders eine Vielzahl von Meßwerten aufgenommen werden, wobei die für die Tastbewegungen des Meßtasters zu bewegenden Massen sehr klein gehalten sind und einer Auswuchtung durch entsprechend gegensinnig bewegte Massen zugänglich sind.

Wird das Tasterausgangssignal, welches den Kontakt des Tastorgans des Meßtasters mit der Prüflingsoberfläche meldet, mit einem Stellungsmelderausgangssignal in Beziehung gesetzt, welches eine bestimmte Bezugsposition des Tastorgans des Meßtasters meldet, etwa den Durchgang der Spitze des Tastorgans durch eine Mittellage während der Abtastbewegung, so ergibt sich bei bekannter, insbesondere gleichförmiger Geschwindigkeit einer Vorschubbewegung des Meßtasters senkrecht zur Abtastrichtung aus der zeitlichen Beziehung zwischen dem der Bezugsposition entsprechenden Ausgangssignal des Stellungsmelders und dem die Antastbedingung des Meßtasters meldenden Tasterausgangssignal eine unmittelbare Aussage über den Verlauf der Oberfläche des Prüflings etwa in der Weise, daß bei ansteigender Prüflingsoberfläche das Tasterausgangssignal in zunehmendem Maße eher auf das Stellungsmelderausgangssignal folgt und bei abfallender Prüfungsoberfläche das Tasterausgangssignal in zunehmendem Maße später auf das Stellungsmelderausgangssignal entsprechend der Bezugsposition folgt. Ein dem Zeitunterschied entsprechendes Signal kann unmittelbar zur Steuerung der Dreikoordinaten-Meßmaschine verwendet werden, so daß die Taster-Meßeinrichtung dem Verlauf der Prüflingsoberfläche nachgeführt wird.

Im übrigen sind vorteilhafte Ausgestaltungen und Weiterbildungen der hier angegebenen Taster-Meßeinrichtung in den dem Patentanspruch 1 nachgeordneten Ansprüchen gekennzeichnet, wobei der Inhalt dieser Ansprüche hierdurch ausdrücklich zum Bestandteil der Beschreibung gemacht wird, ohne an dieser Stelle den Wortlaut im einzelnen zu wiederholen.

Nachfolgend werden Ausführungsbeispiele anhand der Zeichnung beschrieben.

Es stellen dar:

Fig. 1 eine schematische perspektivische Abbildung einer Taster-Meßeinrichtung mit einem Exzenter-Schwingantrieb,

Fig. 2 ein Diagramm zur Erläuterung der Zuordnung der Ausgangssignale des Stellungsmelders und der Ausgangssignale des Meßtasters,

Fig. 3 einen Schnitt durch die Taster-Meßeinrichtung der in Figur 1 gezeigten Art gemäß einer praktischen Ausführungsform und

Fig. 4 einen Schnitt durch eine abgewandelte Taster-Meßeinrichtung mit einem elektromagnetischen Schwingantrieb.

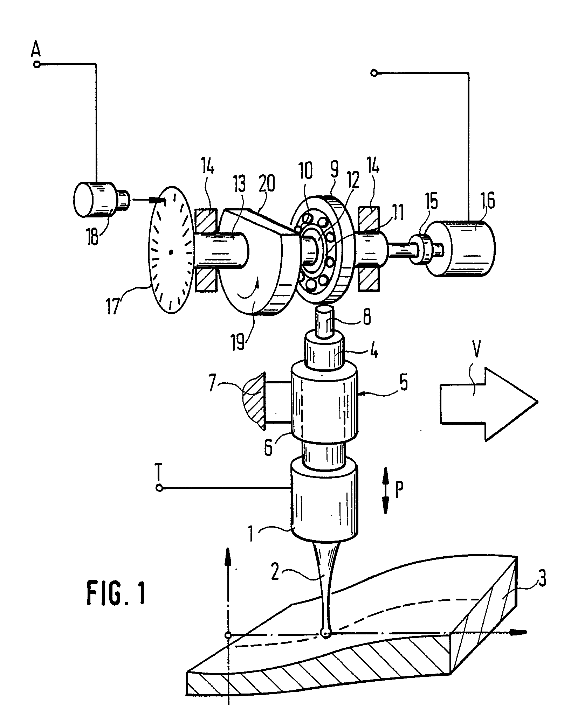

In Figur 1 ist ein Meßtaster 1 gezeigt, der an einem Ausgang T ein Signal abgibt, wenn das Tastorgan 2 des Meßtasters während einer Bewegung des Meßtasters vertikal nach abwärts Berührung mit einer Oberfläche des Prüflings 3 aufnimmt. Das Signal kann in dem Meßtaster 1 durch Unterbrechung eines elektrischen Kontaktes und Inversion des hierdurch erzeugten elektrischen Signales gebildet werden. Einzelheiten des Meßtasters sind dem Fachmann bekannt und bedürfen hier keiner näheren Beschreibung.

Der Meßtaster 1 ist an dem verschieblichen Teil 4 einer Geradführung 5 befestigt, deren feststehendes Teil 6 an eine Haltevorrichtung 7 angeschlossen ist. Die Haltevorrichtung 7 kann von dem vorderen Ende des Querarms einer Dreikoordinaten-Meßmaschine gebildet sein. Die Führungsrichtung der Geradführung 5 ist zu der durch den Pfeil P gekennzeichneten Abtastrichtung des Meßtasters 1 parallel.

Das verschiebliche Teil 4 der Geradführung 5 trägt ein Nockenfolgeorgan 8, das an dem Außenring 9 eines Kugellagers 10 ansteht, dessen Innenring 11 auf einem Exzenter 12 sitzt, der gegenüber der Achse einer Welle 13 eine Exzentrizität von beispielsweise 0,5 mm aufweist. Die Welle 13 ist mittels Lagern 14 an einem Gehäuse gelagert, welches fest mit der Halterungsvorrichtung 7 verbunden ist. Die Achse der Welle 13 steht zu der Antastrichtung des Meßtasters 1 senkrecht.

Die Welle 13 ist über eine spielfreie Kupplung 15 mit einem Getriebemotor 16 gekuppelt, welcher die Welle 13 mit einer geregelten Drehzahl von 5 Umdrehungen je Sekunde bis 10 Umdrehungen je Sekunde anzutreiben vermag.

An der Welle 13 ist ferner eine Drehmelderscheibe 17 befestigt, deren Strichmarken durch einen Detektor 18 optisch abgetastet werden. Die Drehmelderscheibe 17 bildet in Verbindung mit dem Detektor 18 einen Stellungsmelder, welcher an dem Ausgang A Signale abgibt, welche nach Verknüpfung mit einer Sinusfunktion der jeweiligen augenblicklichen Vertikalstellung des Meßtasters 1 entsprechen. Es sei noch erwähnt, daß der Meßtaster 1 und das bewegliche Teil 4 der Geradführung 5 durch in Figur 1 nicht gezeigte Federmittel gegenüber dem stillstehenden Teil 6 der Geradführung 5 so vorgespannt sind, daß das Nockenfolgeorgan 8 in Anlage an dem Außenring 9 des Kugellagers 10 gehalten wird.

Auf der Welle 13 sitzt schließlich noch eine Unwuchtscheibe 19, deren Unwucht durch entsprechende Bemessung einer Abflachung 20 am Scheibenumfang so gewählt ist, daß die Unwucht aufgrund der Exzentrizität des Exzenters 12 und des Kugellagers 10 sowie auch aufgrund der zu beschleunigenden Massen des Meßtasters 1 und des verschieblichen Teils 4 der Geradführung ausgeglichen wird. Die Halterungsvorrichtung 7 wird auf diese Weise von Erschütterungen oder Schwingungen beim Betrieb der Einrichtung freigehalten.

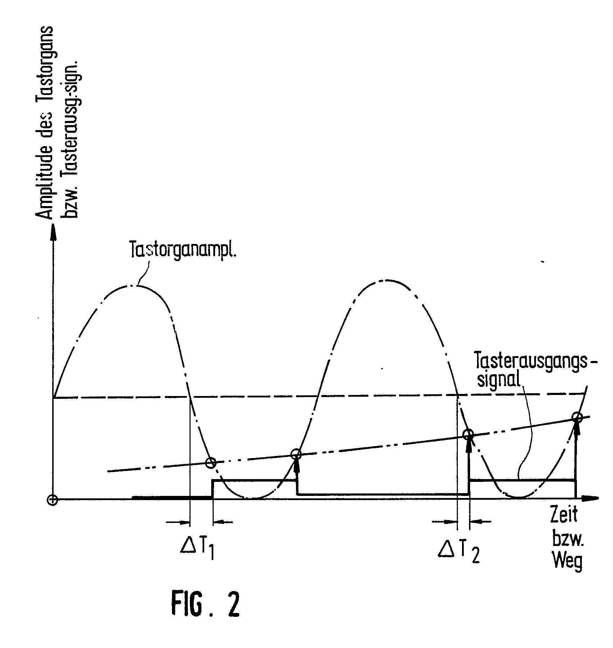

Wird die Taster-Meßeinrichtung gemäß Figur 1 mit einer gleichförmigen Geschwindigkeit in Richtung des Pfeiles V in Horizontalrichtung verfahren, während gleichzeitig das Tastorgan 2 durch den Exzenter-Schwingantrieb zu vertikalen Tastbewegungen in Richtung des Doppelpfeiles P veranlaßt wird, so beschreibt die Spitze des Tastorganges 2 die in Figur 2 durch eine strichpunktierte Linie angedeutete Sinuskurve. Die augenblicklichen Amplitudenwerte relativ zu einer horizontalen Bezugsebene, die etwa durch die Abszisse des Diagramms von Figur 2 versinnbildlicht wird, lassen sich beispielsweise aus einem Speicher entnehmen, in dem die Werte einer Sinusfunktion an aufeinanderfolgenden Adressplätzen gespeichert sind und welcher von einem Ringzähler adressiert wird, der seinerseits von den Ausgangssignalen des Detektors 18 gesteuert wird.

Die Amplitudenwerte, bei denen die Spitze des Tastorgans 2 die Oberfläche des Prüflings 3 antastet, sind der Impulsstirn des in Figur 2 mit einer durchgehenden Linie eingezeichneten Tasterausgangssignales zuzuordnen. Die Amplitudenwerte, bei denen die Spitze des Tastorgans 2 sich wieder von der Oberfläche des Prüflings 3 abhebt, sind jeweils der Rückenflanke des Tasterausgangssignales zuzuordnen. Die durch eine Doppelpunkt-Strich-Linie dargestellte Verbindungslinie zwischen den ausgewählten Amplituden-Meßpunkten gibt unmittelbar den Ver lauf der Oberfläche des Prüflings 3 längs einer Abtastlinie wieder. Um den Einfluß einer Hysterese des Tasterausgangssignales auf das Meßergebnis auszuschließen, kann es zweckmäßig sein, nur die stirnseitige Flanke des Tasterausgangssignales für die Zuordnung zu einem Augenblickswert der Amplitude der Tastbewegung zu benutzen.

Wird von dem Detektor 18 des Stellungsmelders ein Ausgangssignal abgenommen, welches jeweils einem Nulldurchgang der die Tastorganamplitude darstellenden Sinuskurve nach Figur 2 von positiven zu negativen Amplitudenwerten entspricht, so ergibt sich, daß bei mit Bezug auf die Darstellung von Figure 1 ansteigender Prüflungsoberfläche die Impulsstirnflanke des Tasterausgangssignales zunehmend eher auf das erwähnte Nulldurchgangssignal des Stellungsmelders auftritt, wobei die Zeitdifferenz in Figur 2 mit $\Delta T_1$, $\Delta T_2$... bezeichnet ist. Würde die Prüflingsoberfläche abfallen, so würde die Impulsstirnflanke des Tasterausgangssignales zunehmend später auf das Nulldurchgangssignal des Stellungsmelders folgen. Man erkennt also, daß aus der zeitlichen Beziehung zwischen einem eine Bezugsposition des Tastorgans meldenden Ausgangssignal des Stellungmelders und dem Tasterausgangssignal unmittelbar eine Information über den Verlauf der Prüflingsoberfläche erhalten wird. Wird von den beiden genannten Signalen ein Fehlersignal abgeleitet, so kann dieses zur Steuerung des Vorschubantriebes der Dreikoordinaten-Meßmaschine in einer zur Antastrichtung des Meßtasters parallelen Richtung verwendet werden, so daß die Dreikoordinaten-Meßmaschine der Prüflingsoberfläche nachgeführt wird und Prüflingsoberflächen großer Abmessungen und beliebigen Steigungsverlaufes abgetastet werden können. Der Fachmann erkennt, daß bei diesem Meßbetrieb als aufgenommene Meßwerte die jeweiligen Einstellwerte in Richtung der Koordinatenachsen der Meßmaschine in einzelnen Antastpunkten der Prüflingsoberfläche zugeordnet werden.

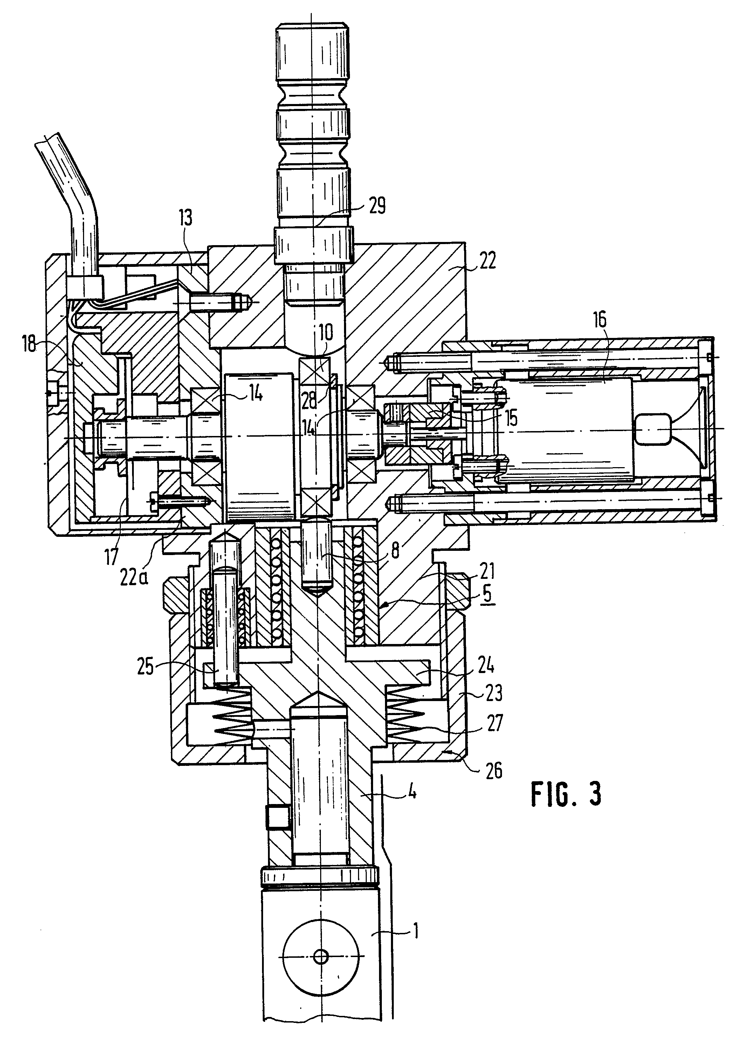

Aus Figur 3 ist zu erkennen, daß bei einer praktischen Ausführungsform die Geradführung 5 an einem mit Bezug auf die Darstellung von Figur 3 nach unten ragenden Ansatz 21 eines Gehäuses 22 Aufnahme findet, wobei der Gehäuseansatz 21 mit einem Außengewinde versehen ist, auf das eine Überwurfmutter 23 aufgeschraubt ist, welche einen Flansch 24 des beweglichen Teiles 4 der Geradführung umgreift. Von dem Flansch 24 ragt ein als Verdrehsicherung dienender Stift 25 nach aufwärts, welcher ebenso wie das bewegliche Teil 4 der Geradführung 5 in ein im Gehäuseansatz 21 befindliches Axialführungskugellager eingreift.

Zwischen dem Flansch 24 und dem radial nach einwärts gerichteten Flansch 26 der Überwurfmutter 23 befindet sich eine Feder 27, welche den von dem Flansch 24 aufragenden zylindrischen Abschnitt des beweglichen Teiles 4 der Geradführung in Richtung auf das Innere des Gehäuses 22 vorspannt.

Das Nockenfolgeorgan 8 ist in eine Axialbohrung des zylindrischen Abschnittes des beweglichen Teiles 4 der Geradführung 5 eingesetzt und liegt am Außenring des Kugellagers 10 an, welch letzteres mittels eines Federringes 28 auf dem geringe Exzentrizität aufweisenden Absatz der Welle 13 festgehalten ist. Die Lager 14 zur Abstützung der Welle 13 befinden sich in einer abgesetzten Bohrung des Gehäuses 22 bzw. einer entsprechenden abgesetzten Bohrung eines Gehäusedeckels 22 a. Auf der Seite des die Drehmelderscheibe 17 tragenden Endes der Welle 13 ist an dem Gehäusedeckel 22 a ein Drehmeldergehäuse in der dargestellten Weise befestigt, während auf der gegenüberliegenden Seite an dem Gehäuse 22 der Getriebmotor 16 festgeschraubt ist und über die spielfreie Kupplung 15 die Welle 13 antreibt.

Schließlich ist mit Bezug auf die Darstellung von Figur 3 in die Oberseite des Gehäuses 22 ein mit Indexnuten versehener zylindrischer Zapfen 29 eingeschraubt, mittels welchem die Taster-Meßeinrichtung an eine Aufnahmevorrichtung einer Dreikoordinaten-Meßmaschine angeschlossen werden kann.

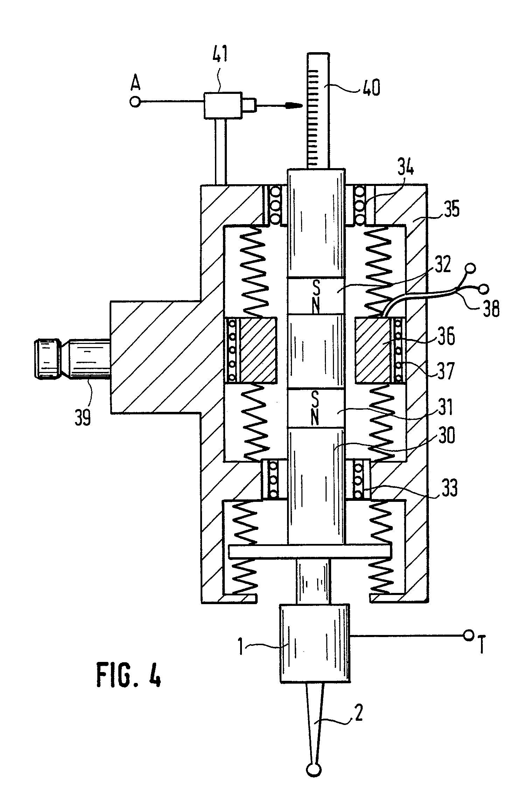

Figur 4 zeigt eine abgewandelte Ausführungsform des Schwingantriebs für den Meßtaster 1. Der Meßtaster ist an einem zylindrischen Ankerteil 30 befestigt, das Permanentmagnetstücke 31 und 32 der eingezeichneten Polung enthält. Der zylindrische Anker 30 ist über Axialführungskugellager 33 und 34 gegenüber einem Gehäuse 35 abgestützt. Außerdem ist im Innenraum des Gehäuses 35 eine Magnetspule 36 mittels eines weiteren Axialführungskugellagers 37 parallel zur Führungsrichtung des Ankers 30 geführt. In Figur 4 schematisch eingezeichnete Federn stützen einen am unteren Ende des Ankers 30 angeordneten scheibenförmigen Flansch gegenüber Gehäuseabsätzen ab und außerdem stützen weitere Federn die Magnetspule 36 gegenüber Gehäuseabsätzen ab. Die Massen des Ankers 30 und der damit verbundenen Teile sowie des Meßtasters 1 einerseits und der Magnetspule 36 sowie damit notwendigenfalls verbundener Ausgleichsmassen andererseits sind so gewählt, daß bei Anregung des Elektromagneten 36 über die Leitung 38 mit einem Wechselstrom der Anker 30 und der Meßtaster 1 einerseits und der Elektromagnet 36 andererseits gegensinnige Schwingbewegungen relativ zu einem gemeinsamen Gravitationszentrum ausführen und das Gehäuse 35 keine Schwingungen auf eine Haltevorrichtung überträgt, an welche das Gehäuse 35 über einen Anschlußzapfen 39 angeschlossen ist.

Mit dem Anker 30 ist ein Markenträger 40 fest verbunden, dessen Strichmarken von einem Detektor 41 abgetastet werden. Durch geeignete Ausbildung des Strichmarkenträgers 40 und des Detektors 41 kann vom Detektor 41 auch eine Information über die Bewegungsrichtung des Strichmarkenträgers 40 relativ zum Detektor 41 erhalten werden. Wird von den Ausgangssignalen des Detektors 41 ein Aufwärts-/Abwärtszähler gesteuert, so liefert der Zähler als Zählerstand unmittelbar die jeweiligen Amplitudenwerte der Tastbewegung der Spitze des Tastorganes 2.

Es sei hier bemerkt, daß der elektromagnetische Schwingantrieb in Figur 4 nur schematisch angedeutet ist und auch in anderer Form verwirklicht werden kann. Entsprechendes gilt für den Stellungsmelder mit den Teilen 40 und 41. Ein Detektor eines Stellungsmelders hoher Auflösung kann auch durch optische Abtastung eines Moiré-musters verwirklicht werden. ·

## Ansprüche

1. Taster-Meßeinrichtung mit einem Meßtaster (1), welcher ein den Kontakt eines Tastorgans (2) des Meßtasters mit einer Prüflingsoberfläche anzeigendes Signal erzeugt und an eine Haltevorrichtung (7) anschließbar ist, welche in vorbestimmten Richtungen mit meßbarer Geschwindigkeit bzw. um meßbare Wegstücke relativ zu einer Bezugsposition verfahrbar ist, dadurch gekennzeichnet, daß der Meßtaster (1) gegenüber der Haltevorrichtung (7) zur Ausführung von Schwingbewegungen definierter Amplitude und Frequenz in einer zu einer Antastrichtung des Meßtasters parallelen Richtung beweglich geführt und mit einem Schwingantrieb gekuppelt ist.

2. Einrichtung nach Anspruch 1, dadurch gekennzeichnet, daß mit dem Meßtaster (1) ein Stellungsmelder (17, 18 bzw. 40, 41) fest verbunden ist, von dem Signale entsprechend dem jeweiligen Augenblickswert der Amplitude der Tastbewegung des Meßtasters abnehmbar sind.

3. Einrichtung nach Anspruch 1 oder 2, dadurch gekennzeichnet, daß der Meßtaster (1) an einer sich parallel zur Antastrichtung seines Tastorgans (2) erstreckenden Geradführung (5) befestigt ist, deren verschiebliches Teil (4) ein Nockenfolgeorgan (8) trägt, das an einem von einem Antriebsmotor (16) in Umlauf gesetzten Exzenter, insbesondere über ein auf dem Exzenter angeordnetes Kugellager (10) ansteht.

4. Einrichtung nach Anspruch 3, dadurch gekennzeichnet, daß in oder neben dem Exzenter (10, 12) auf gleicher Welle (13) mit ihm eine Unwuchtmasse (19) zur Kompensation der Trägenmasse des Meßtasters (1) und des verschieblichen Teils (4) der Geradführung sowie des Exzenters vorgesehen ist.

5. Einrichtung nach Anspruch 3 oder 4, dadurch gekennzeichnet, daß der Stellungsmelder eine an der Welle (13) des Exzenters befestigte Drehmelderscheibe (17) und einen deren Strichmarken abtasteten Detektor (18) enthält.

6. Einrichtung nach Anspruch 1 oder 2, dadurch gekennzeichnet, daß das verschiebliche Teil der Geradführung den Anker eines elektromagnetischen Schwingantriebs bildet oder mit einem Anker eines elektromagnetischen Schwingantriebs verbunden ist (Fig. 4).

7. Einrichtung nach Anspruch 6, dadurch gekennzeichnet, daß sowohl die Magnetspule als auch der Anker des elektromagnetischen Schwingantriebs federnd gegenüber einem Gehäuse (35) abgestützt sind, derart, daß die Teile des elektro-magnetischen Schwingantriebes Schwingungen re-lativ zu einem gemeinsamen Gravitationszentrum ausführen.

8. Einrichtung nach einem der Ansprüche 1 bis 7, dadurch gekennzeichnet, daß das Ausgangssignal des Meßtasters (1) und ein eine bestimmte Bezugsposition des Meßtasters mit Bezug auf die Antastrichtung meldendes Ausgangssignal eines bzw. des Stellungsmelders einem Steuersignalgenerator zuführbar sind, welcher zur Nachführung der Haltevorrichtung (7) mit Bezug auf die Antastrichtung des Meßtasters entsprechend einer Steigung oder einem Gefälle einer Prüfungsoberfläche vermittels eines Vorschubantriebs dient.

FIG. 1

FIG. 2

FIG. 3

FIG. 4

| | **EINSCHLÄGIGE DOKUMENTE** | | EP 88113023.1 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | FR - A1 - 2 408 813 (SOCIETE D'APPLICATIONS) <br> * Gesamt * <br> -- | 1 | G 01 B 21/04 <br> G 01 B 7/03 |
| X | GB - A - 2 070 249 (RANK) <br> * Gesamt * <br> -- | 1 | |
| A | DD - A - 94 899 (LOTZ) <br> * Gesamt * <br> -- | | |
| A | DE - B2 - 2 362 173 (TESA) <br> * Gesamt * <br> ---- | | |
| | | | **RECHERCHIERTE SACHGEBIETE (Int. Cl.4)** |
| | | | G 01 B 3/00 <br> G 01 B 5/00 <br> G 01 B 7/00 <br> G 01 B 21/00 |

Der vorliegende Recherchenbericht wurde für alle Patentansprüche erstellt.

| Recherchenort | Abschlußdatum der Recherche | Prüfer |
|---|---|---|
| WIEN | 14-12-1988 | TOMASELLI |